# EUROPEAN PATENT APPLICATION

(11) **EP 4 293 736 A1**
(43) Date of publication of application: **20.12.2023**
(21) Application number: 22179161.9
(22) Date of filing: 15.06.2022
(51) Int. Cl.: H01M 4/04, H01M 4/16, H01M 4/76, H01M 10/06, H01M 10/12, H01M 50/403, H01M 50/411, H01M 50/417, H01M 50/423, H01M 50/469

(54) **MULTITUBULAR GAUNTLET WITH OVERLAPPING LATERAL EDGES**

(71) Applicant: Amer-Sil sa, 8281 Kehlen (LU)
(72) Inventor: GOKSU, Ihsan, 8281 Kehlen (LU); SOQUAY, Dany, 8281 Kehlen (LU)
(74) Representative: Brantsandpatents bv

(57) **Abstract**

The current invention relates to continuous process for the production of a multitubular gauntlet, said process comprising the steps of: continuously providing at least one sheet of fabric with two lateral edges; overlapping two lateral edges; seaming said overlap by welding or gluing, forming a closing seam wherein both lateral edges are joined together creating a tubular fabric, seaming said tubular fabric along seams parallel to the closing seam, thereby forming flat tubes parallel to the closing seam; and thermoforming the plurality of flat tubes into the desired shape corresponding the electrode to be used, thereby obtaining the multitubular gauntlet. The invention further relates to a multitubular gauntlet for lead-acid batteries comprising at least one sheet of fabric with two lateral edges, said fabric forming a plurality of parallel tubes, wherein at least one lateral tube forming the edge of said gauntlet comprises an overlap of said lateral edges, wherein said overlap is seamed by welding or gluing.

## Description

### FIELD OF THE INVENTION

The invention is related to multitubular bags for electrodes of lead-acid batteries, in particular for multitubular bags with an edgeless lateral seam, and to a process for producing said multitubular bags.

### BACKGROUND

Lead acid batteries are widely used and include adjacent positive and negative electrodes immersed in an electrolyte and spaced by separators.

Lead-acid batteries of the tubular type are customarily constructed with tubular positive plates, constituent parts of which include: a grid member having a top bar; a post or burning lug and a plurality of current carrying spines; pencils of active material surrounding the current carrying spines; tubular bodies arranged to support and confine the pencils of active material and maintain such active mass in contact with the current carrying spines; and means for closing ends of the tubes.

The tubular bodies are required to provide a number of functions including: enclosure and support of the active material to maintain the active material in contact with the spines; providing electrical resistance between the active material and any other conductors; maintenance of the dimensional stability of the pencils of active material particularly during periods of swelling of the active material; and, finally, provision of adequate communication between the electrolyte and the active material throughout the length of the tubular bodies.

### SUMMARY OF THE INVENTION

The present invention and embodiments thereof serve to provide a solution to one or more of above-mentioned disadvantages. To this end, the present invention relates to a continuous process for the production of a multitubular gauntlet according to claim 1.

Preferred embodiments of the device are shown in any of the claims 2 to 9.

In a second aspect, the present invention relates to a multitubular gauntlet according to claim 10. Preferred embodiments of the method are shown in any of the claims 10 to 14.

A specific preferred embodiment relates to a process according to claim 8 or a multitubular gauntlet according to claim 12. The overlap provides a specific area with an additional fabric layer. This is particularly useful for providing additional electrical resistance to the multitubular gauntlet, in the specific locations that require it, such as the lateral edges. The electrical insulation of multitubular gauntlets has been provided by applying hotmelt, typically polyolefin hotmelt, at the lateral edge of the gauntlet.

### DESCRIPTION OF FIGURES

The following description of the figures of specific embodiments of the invention is merely exemplary in nature and is not intended to limit the present teachings, their application or uses. Throughout the drawings, corresponding reference numerals indicate like or corresponding parts and features.
**Figure 1** shows a schematic representation of a continuously supplied sheet of fabric.
**Figure 2** shows a schematic representation of bending a continuously supplied sheet of fabric.
**Figure 3A, 3B** **and** **3C** shows a schematic representation of continuously aligning an overlap and seaming along said overlap.
**Figure 4** shows a schematic representation of a continuously formed tubular fabric.
**Figure 5** shows a schematic representation of a tubular fabric with an overlapping closing seam.
**Figure 6** shows a schematic representation of a flat tubular fabric with an overlapping closing seam.
**Figure 7** shows a schematic representation of seaming a flat tubular fabric along seams parallel to the closing seam.
**Figure 8A** shows a schematic representation of a thermoformed multitubular gauntlet according to an embodiment of the present invention with an overlapping seam at the side of the lateral tube.
**Figure 8B** shows a schematic representation of a thermoformed multitubular gauntlet according to an embodiment of the present invention with an overlapping seam at the top of the lateral tube.
**Figure 9** shows a schematic representation of a thermoformed multitubular gauntlet with two reinforced lateral edges.
Figure 10A, 10B and 10C show a schematic cross-section of a thermoformed multitubular gauntlet with rounded rectangular shaped tubes, according to an embodiment of the present invention.

### DETAILED DESCRIPTION OF THE INVENTION

The present invention concerns a multitubular gauntlet and production process therefor.

Unless otherwise defined, all terms used in disclosing the invention, including technical and scientific terms, have the meaning as commonly understood by one of ordinary skill in the art to which this invention belongs. By means of further guidance, term definitions are included to better appreciate the teaching of the present invention.

As used herein, the following terms have the following meanings:
"A", "an", and "the" as used herein refers to both singular and plural referents unless the context clearly dictates otherwise. By way of example, "a compartment" refers to one or more than one compartment.
"About" as used herein referring to a measurable value such as a parameter, an amount, a temporal duration, and the like, is meant to encompass variations of +/-20% or less, preferably +/-10% or less, more preferably +/-5% or less, even more preferably +/-1% or less, and still more preferably +/-0.1% or less of and from the specified value, in so far such variations are appropriate to perform in the disclosed invention. However, it is to be understood that the value to which the modifier "about" refers is itself also specifically disclosed.
"Comprise", "comprising", and "comprises" and "comprised of" as used herein are synonymous with "include", "including", "includes" or "contain", "containing", "contains" and are inclusive or open-ended terms that specifies the presence of what follows e.g. component and do not exclude or preclude the presence of additional, non-recited components, features, element, members, steps, known in the art or disclosed therein.

Furthermore, the terms first, second, third and the like in the description and in the claims, are used for distinguishing between similar elements and not necessarily for describing a sequential or chronological order, unless specified. It is to be understood that the terms so used are interchangeable under appropriate circumstances and that the embodiments of the invention described herein are capable of operation in other sequences than described or illustrated herein.

The recitation of numerical ranges by endpoints includes all numbers and fractions subsumed within that range, as well as the recited endpoints.

The expression "% by weight", "weight percent", "%wt" or "wt%", here and throughout the description unless otherwise defined, refers to the relative weight of the respective component based on the overall weight of the formulation.

Whereas the terms "one or more" or "at least one", such as one or more or at least one member(s) of a group of members, is clear *per se,* by means of further exemplification, the term encompasses *inter alia* a reference to any one of said members, or to any two or more of said members, such as, e.g., any ≥3, ≥4, ≥5, ≥6 or ≥7 etc. of said members, and up to all said members.

Unless otherwise defined, all terms used in disclosing the invention, including technical and scientific terms, have the meaning as commonly understood by one of ordinary skill in the art to which this invention belongs. By means of further guidance, definitions for the terms used in the description are included to better appreciate the teaching of the present invention. The terms or definitions used herein are provided solely to aid in the understanding of the invention.

Reference throughout this specification to "one embodiment" or "an embodiment" means that a particular feature, structure or characteristic described in connection with the embodiment is included in at least one embodiment of the present invention. Thus, appearances of the phrases "in one embodiment" or "in an embodiment" in various places throughout this specification are not necessarily all referring to the same embodiment, but may. Furthermore, the particular features, structures or characteristics may be combined in any suitable manner, as would be apparent to a person skilled in the art from this disclosure, in one or more embodiments. Furthermore, while some embodiments described herein include some but not other features included in other embodiments, combinations of features of different embodiments are meant to be within the scope of the invention, and form different embodiments, as would be understood by those in the art. For example, in the following claims, any of the claimed embodiments can be used in any combination.

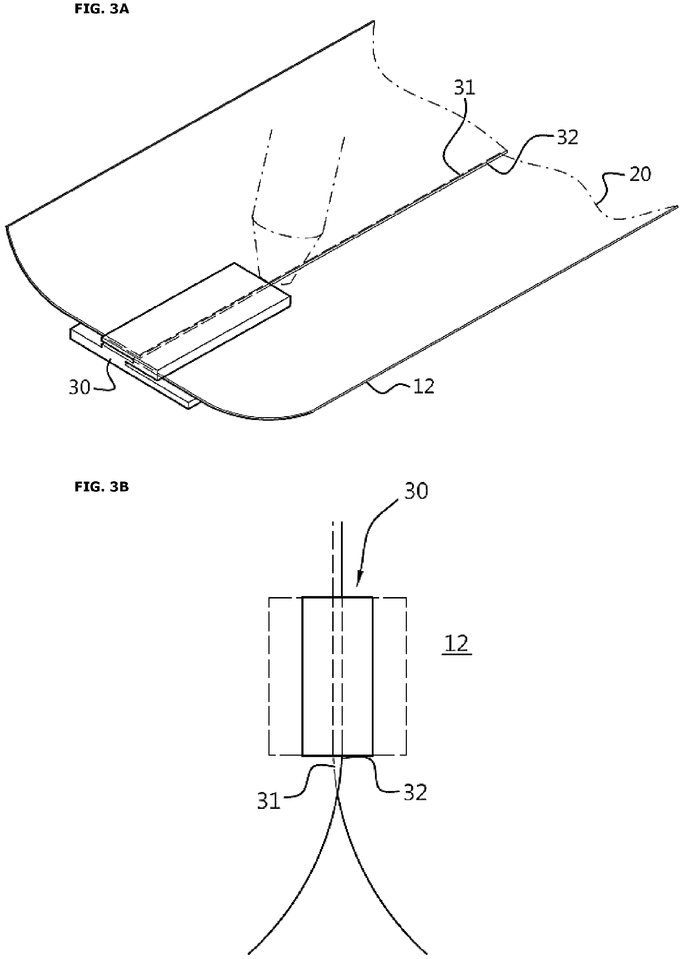

"Overlap" and "overlapping" two edges as used herein refers to one edge laying on top of another, so that the edges overlap rather than meeting at a single spot. When overlapping edges are sealed, one edge is found on one side of the sheet and the other edge is found on the opposite side of the sheet. Preferably overlapping edges do not protrude, nor do they require folds near the edges unlike joining edges without overlap. Particularly, overlapping edges do not result in a substantial change of direction of either sheet or sides of the sheet. Such a confirmation is shown in figures 3A, 3B, 3C, 4 and 5.

"Meeting edges" are edges which may be joined where they meet absent of overlap. Meeting edges can generally have the lateral edges of both sheets or sides of the sheet meet at the same spot after the seal. When meeting edges are sealed, both edges are found at the same side of the sheet. This generally results in a protrusion of at least the edges but commonly also the seal itself.

In a first aspect, the invention to a continuous process for the production of a multitubular gauntlet, said process comprising the steps of:
- providing at least one sheet of fabric with two lateral edges;
- overlapping two lateral edges;
- seaming said overlap by welding, preferably ultrasonic welding or gluing , forming a closing seam wherein both lateral edges are joined together creating a tubular fabric,
- seaming said tubular fabric along seams intermediate parallel to the closing seam, thereby forming flat tubes parallel to the closing seam;
- thermoforming the plurality of flat tubes into the desired shape corresponding to the electrode to be used, thereby obtaining the multitubular gauntlet.

Overlapping seams are more difficult to create, particularly in a tubular shape and continuous process. However, the inventors have surprisingly found that aweld of two overlapping lateral edge result in multitubular gauntlets with substantially higher burst pressures than gauntlets with a protruding edge formed by sealing meeting but not overlapping lateral edges. Furthermore, it is the aim of the invention to maximize the amount of active mass for a given gauntlet length.

Some fabric characteristics that are important for a good final gauntlet quality:
- The tensile strength of the fabric in the machine direction (MD) and cross direction (CD) has to be high enough so that the formed gauntlet resists some internal pressures (burst strength) above 6 bars, preferably above 8 bars, more preferably above 10 bars, most preferably above 12 bars. Furthermore, it is desirable to provide good rigidity to subtends the customer process. The reason is that the gauntlets filling with the positive active mass may be done by injection of a lead oxide paste at moderate, high or very high pressure depending on the filling machine.
- The electrical resistance has to be as low as possible in order to limit the internal resistance of the battery cells. However, electrical resistance between the active mass and conductive materials should be sufficiently high to prevent short-circuiting. This is generally a concern at the lateral tubes of the gauntlet.
- The fabric elongation has to be chosen carefully so that the finished gauntlets have good elastic properties. This is of first importance because the positive active mass undergoes volume changes during alternate charges and discharges due to the alternate transformation of PbO2 into PbSO4 and vice versa. This phenomenon is known as active mass "breathing". The gauntlet has to limit the active mass expansion and, more importantly, to be elastic enough to perfectly constrain the active mass during contraction and recover its initial tube diameter after contraction. This is the only way to ensure the permanent cohesion of the active mass particles among themselves and around the lead spine and is of first importance to maintain the capacity along the life.

The desired shape corresponding to the electrode to be used may be any suitable shape. Particularly interesting shapes are a round, preferably circular cross-section or a rounded rectangular cross-section. Round shapes are highly symmetrical Making them easier to work with, particularly in terms of processability. Furthermore, circular cross-sections have a low surface-to-area (and thus surface-to-volume) ratio, lowering the amount of fabric needed. A rounded rectangular cross-section is advantageous as the amount of mass for a given gauntlet length can be optimized.

In a preferred embodiment, the closing seam has a width of at most 5.0 mm, preferably the closing seam has a width of at most 4.0 mm, more preferably the closing seam has a width of at most 3.5 mm. In another preferred embodiment, the closing seam has a width of at least 1.0 mm, preferably at least 2.0 mm, more preferably at least 2.5 mm, most preferably at least 3.0 mm. The inventors found that these widths are an optimum between strength of the seal and space required for the seal.

In a preferred embodiment, the fabric is a non-woven fabric.

In a preferred embodiment, the fabric comprises fibers chosen from the group of: polyester, polyolefin such as polyethylene and polypropylene, preferably polypropylene, polyamide and glass fiber. In a more preferred embodiment, the fabric comprises fibers chosen from the group of: polyethyleneterephtalate (PET), polybutyleneterephtalate (PBT),bicomponent PET-PBT fibers and bicomponent PET-coPET fibers. In a more preferred embodiment, the fabric comprises bicomponent PET-PBT fibers and bicomponent PET-coPET fibers. In a more preferred embodiment, the fabric comprises bicomponent PET-PBT fibers associated to PET fibers. Bicomponent PET-coPET fibers are bicomponent fibers of two distinct PET polymers with different material properties, in particular glass temperature and melt temperatures, generally due to a difference in the degree of polymerization and optionally copolymers and additives.

In a preferred embodiment, the parallel intermediate seams are formed by stitching, sewing or ultrasonic welding.

In another preferred embodiment, the process comprises two sheets of fabric, wherein each lateral edge of each sheet of fabric is overlapped and seamed to a lateral edge from another sheet of fabric, thereby forming at least two preferably parallel closing seams.

In another preferred embodiment the overlap has a width substantially wider than said closing seam, said overlap forming a reinforcing lateral edge. More preferably, the overlap corresponding to the reinforcing lateral edge is fixated with at least one fixating seam. Preferably the fixating seam is parallel to the closing seam. Preferably the fixating seam is formed by welding, or stitching or glued or any oder assembling method. The reinforced lateral edge can advantageously increase electrical resistance at desired locations of the multitubular gauntlet. This may advantageously reduce the need for hot melt finishing to obtain a similar result.

In a preferred embodiment, the reinforced lateral edge has a width of at least 3 mm, preferably at least 4 mm, preferably at least 5 mm, preferably at least 6 mm, preferably at least 7 mm, preferably at least 8 mm, preferably at least 9 mm, preferably at least 10 mm, preferably at least 11 mm, preferably at least 12 mm, preferably at least 13 mm, preferably at least 14 mm, preferably at least 15 mm, preferably at least 16 mm, preferably at least 17 mm, preferably at least 18 mm, preferably at least 19 mm, preferably at least 20 mm.

In one embodiment, the reinforced lateral edge may be welded over the full width of the overlap. This advantageously prevents the formation of a pocket between the seams which close the overlapping lateral edges; as the overlapping lateral edges are connected over the full width of the overlap. The lack of pockets prevents the buildup of material therein.

In a second aspect, the present invention relates to a multitubular gauntlet for lead-acid batteries comprising at least one sheet of fabric with two lateral edges, said fabric forming a plurality of parallel tubes, wherein at least one lateral tube forming the edge of said gauntlet comprises an overlap of said lateral edges, wherein said overlap is seamed by welding, preferably ultrasonic welding, or gluing.

In a preferred embodiment, the multitubular gauntlet according to the second aspect of the invention is produced by a process according to the first aspect of the invention.

In a preferred embodiment, said overlap has a width substantially wider than said closing seam, said overlap forming a reinforcing lateral edge.

In a preferred embodiment, said gauntlet has a burst strength before oxidation and a burst strength after oxidation of at least 6 bar, preferably at least 8 bar, more preferably at least 10 bar, most preferably at least 12 bar.

In a preferred embodiment, the ratio of the tensile strength of the closing seam measured perpendicular to said seam to the tensile strength of said fabric is at least 70%, more preferably at least 75%, more preferably at least 80%, more preferably at least 85%, more preferably at least 95%, more preferably at least 98%, more preferably at least 99%, most preferably at least 100%.

The invention is further described by the following non-limiting examples which further illustrate the invention, and are not intended to, nor should they be interpreted to, limit the scope of the invention.

The present invention will be now described in more details, referring to examples that are not limitative.

### DESCRIPTION OF FIGURES

With as a goal illustrating better the properties of the invention the following presents, as an example and limiting in no way other potential applications, a description of a number of preferred applications of the method for examining the state of the grout used in a mechanical connection based on the invention, wherein: FIG.

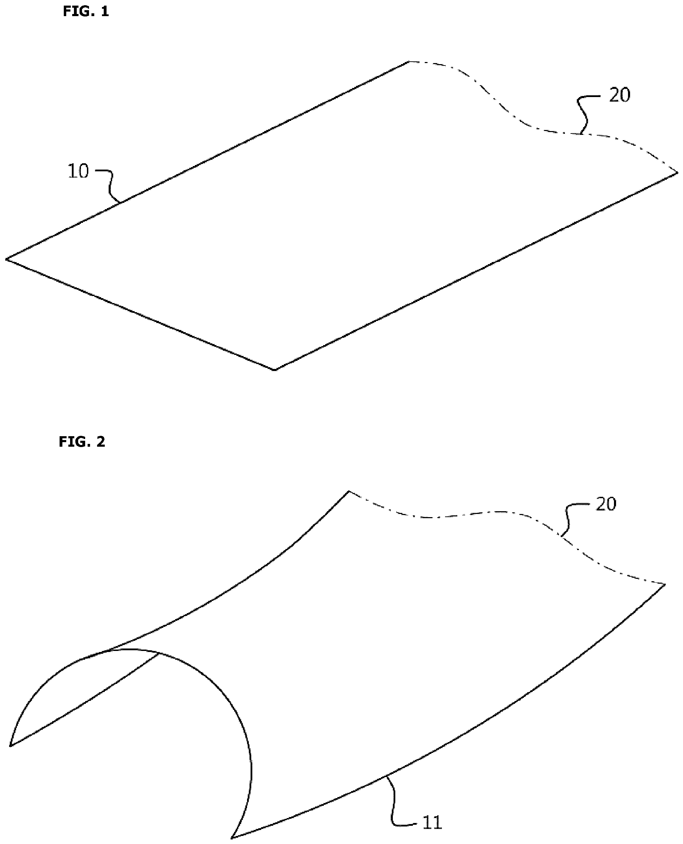

**Figure 1** shows a schematic representation of a continuously supplied sheet of fabric 10. Preferably a continuously supplied sheet is provided from a roll. More preferably, the final edge of a sheet of an ending roll can be connected to the leading edge of a next roll of fabric. Figure 1 shows continuous edge 20 as a representation for a continuously provided sheet.

This allows continuous operation. The rolls can be connected through for example seaming such as ultrasonic seaming, stitching, taping or gluing.

**Figure 2** shows a schematic representation of bending a continuously supplied sheet of fabric 11. Bending allows overlapping the lateral edges of a continuously supplied sheet without creating a fold line. Figure 2 shows continuous edge 20 as a representation for a continuously provided sheet.

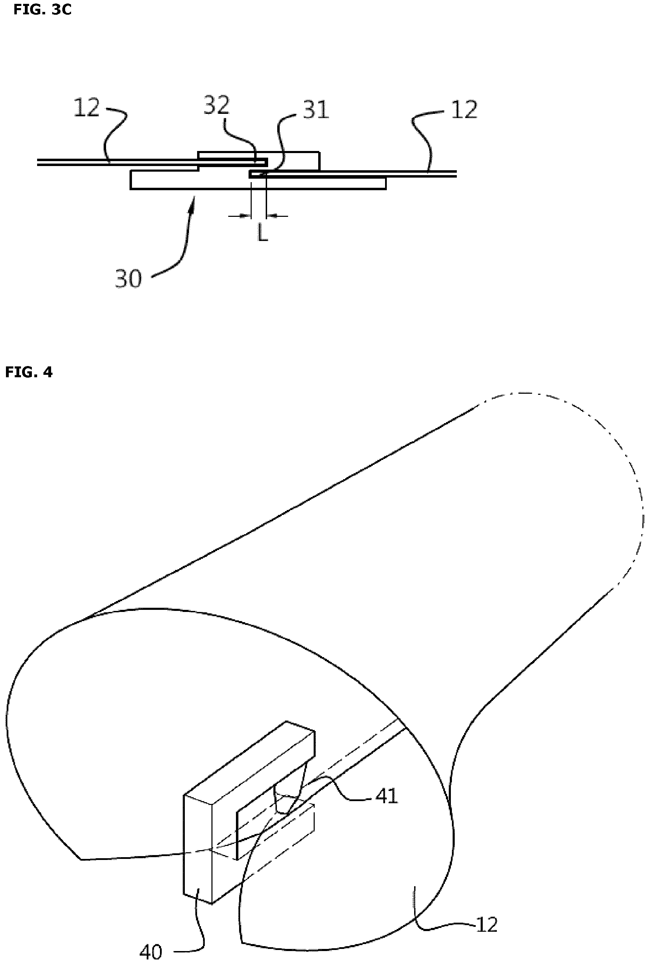

**Figure 3A, 3B** **and** **3C** shows a schematic representation of continuously aligning an overlap and seaming along said overlap. Figure 3A, 3B and 3C particularly show an alignment aid 30 which ensures a tightly controlled overlap between lateral edges 31, 32 in a continuous manner. This results in a tubular, partially welded continuous sheet 12. Continuous edge 20 is a representation for a continuously provided sheet. In a preferred embodiment, the ultrasonic welding device is located close to the alignment aid.

**Figure 4** shows a schematic representation of a continuously formed tubular fabric 12 by ultrasonic welding along the overlap of lateral edges 41, 42. Ultrasonic welding an edge is generally done at a protruding edge where both welding heads are located outside the tubular fabric. Having one welding head 40 within the tubular shape allows for welding along an overlapping seam which the inventors found is highly beneficial for multitubular gauntlets, as the edge of the tube is flat, that is to say has an overlapping closing seam. In other words, the seam lies in the plane of the tube rather than orthogonal to it and thus protruding from it.

Especially for continuous operation, having all welding equipment located outside the tubular fabric as is custom in the art allows for higher ease of operation. However, this setup results in a protruding seam without overlap and both lateral edges protrude externally to the tubular shape.

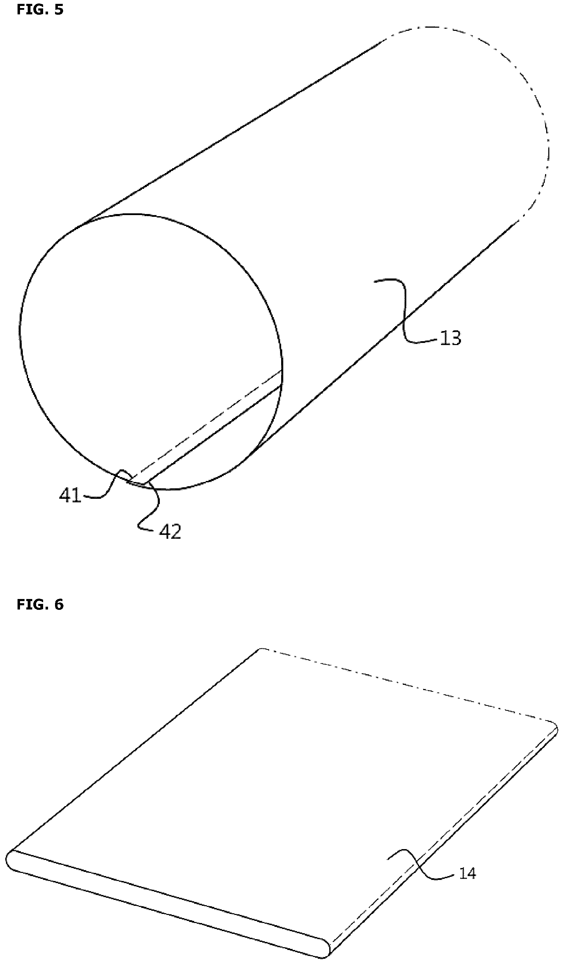

**Figure 5** shows a schematic representation of a tubular fabric with an overlapping closing seam 13. Seaming overlapping fabric as shown in figure 4 does not produce a protruding seam, but an overlapping or flat seam along the overlapping lateral edges 41, 42. The lack of protrusion as can be seen in **figure 5** is highly desirable as it allows a tighter packing of active mass within the battery, thereby increasing energy volume density.

Additionally, the overlapping seam as shown in **figure 5** has at most one lateral edge 41 that may protrude externally to the tubular shape. The other lateral edge 42 may protrude internally to the tubular shape. This is unlike the prior art where both lateral edges may protrude externally to the tubular shape past the protruding seam.

The inventors found that seaming the overlap with ultrasonic seaming is much stronger than a protruding seam as custom in the art. As a result, multitubular gauntlets with higher tensile strength can be obtained.

**Figure 6** shows a schematic representation of a flat tubular fabric with an overlapping closing seam 14. In a preferred embodiment, the flat tubular fabric may be folded along the closing seam. Folding the tubular fabric to a flat shape is beneficial for the parallel seaming of the intermediate seams.

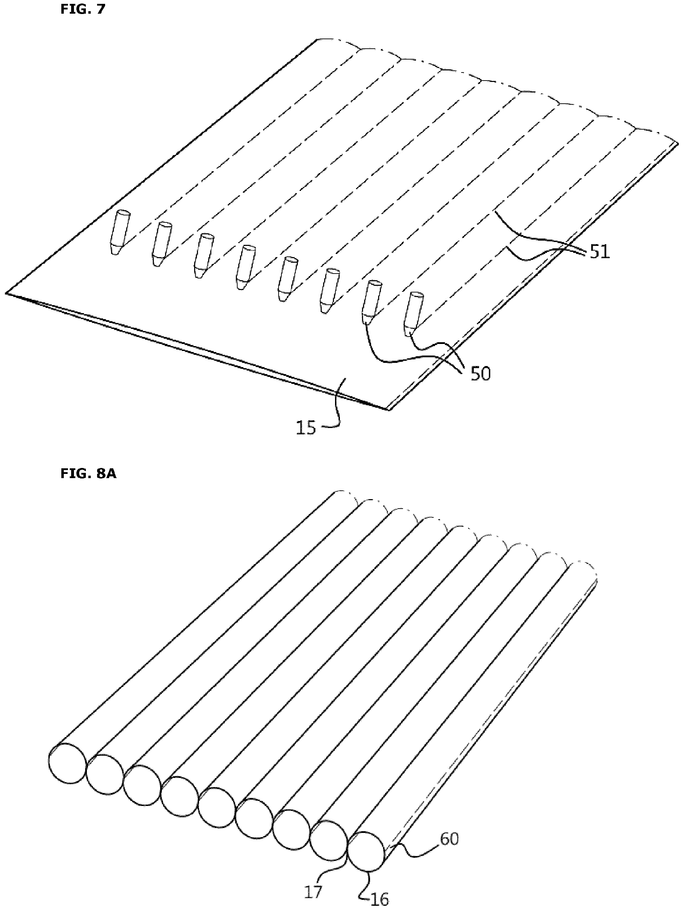

**Figure 7** shows a schematic representation of seaming a flat tubular fabric along intermediary seams 51 parallel to the closing seam. These seams can be ultrasonically welded by a series of parallel welding heads 50. Alternatively the seams may be stitched, glued or connected by other means. Alternatively, the seams can be welded by one or more welding heads, optionally utilizing multiple welding wheels (not shown).

Subsequent to the seaming parallel intermediary seams, the flat multitubular fabric may be cut to size lengthwise. This ends the full continuous operation.

**Figure 8A** shows a schematic representation of a thermoformed multitubular gauntlet. Thermoforming is generally done by inserting hot rods into the flat multitubular fabric 14, causing the fabric to shrink and settle into its multitubular shape as shown.

The thermoformed multitubular gauntlet comprises a series of adjacent thermoformed fabric tubes 16, separated by intermediary seams 17, between adjacent tubes, as well as at least one flat lateral seam 60 on at least one of the lateral tubes. In figure 8A, the flat lateral seam is located on the opposite side of the intermediary seam between the lateral tube and its adjacent tube.

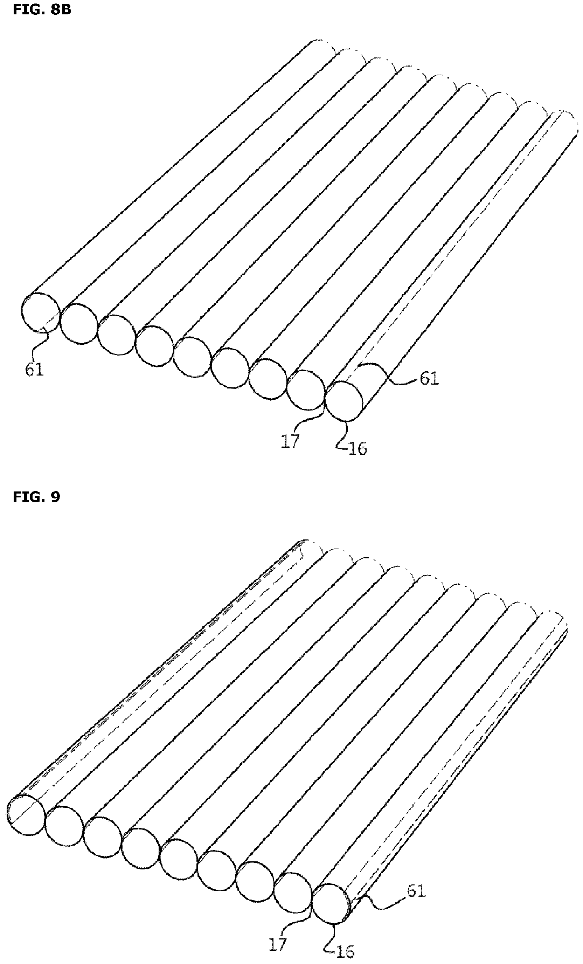

**Figure 8B** shows a schematic representation of a thermoformed multitubular gauntlet, formed similarly as for Figure 8A except for an offset of the closing seams prior to forming the intermediary seams; so that the closing seam is located at the top or bottom of the lateral tube. This can be advantageous to avoid having any protrusions in the plane forming the axises of the tubes forming the multitubular gauntlet. Figure 8B shows the resulting multitubular gauntlet, comprising a series of adjacent thermoformed fabric tubes 16, separated by intermediary seams 17 between adjacent tubes, as well as two flat lateral seams 61 provided at the top or bottom of the lateral tubes.

**Figure 9** shows a schematic representation of a thermoformed multitubular gauntlet comprising a series of adjacent thermoformed fabric tubes 16, separated by seams 17, between adjacent tubes, as well as two flat, reinforced edges at the lateral edge of both of the lateral tubes of the multitubular gauntlet. This gauntlet advantageously has improved sturdiness and electric resistance in a critical location, thereby providing an additional safeguard against short-circuiting.

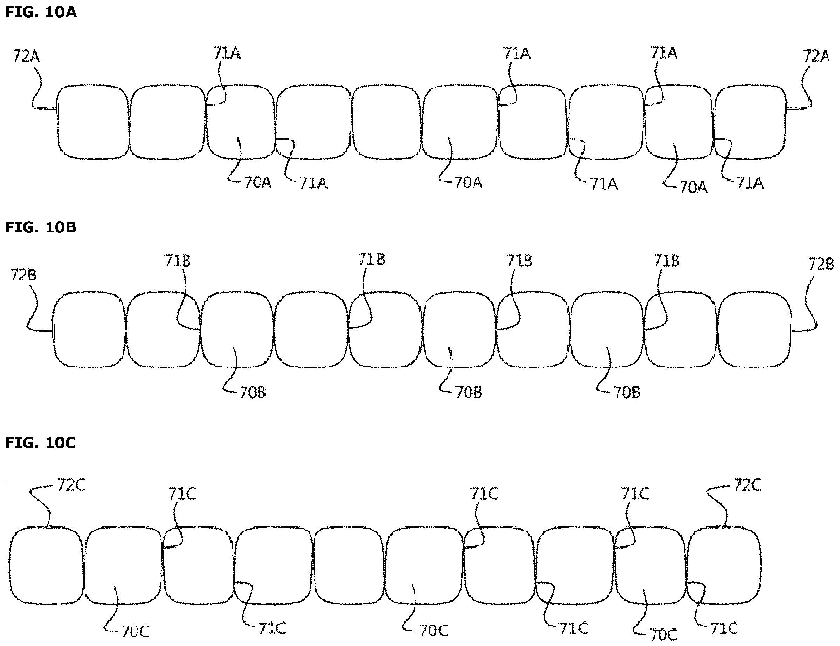

**Figure 10A, 10B and 10C** show a schematic cross-section of a thermoformed multitubular gauntlet with rounded rectangular shaped tubes. Figure 10A shows the intermediary seams 71A between two adjacent rounded rectangular shaped tubes 70A are off center relative to the center of the adjacent faces of two rectangular shaped tubes. These intermediary seams alternate between connected above and below the center of the adjacent faces of the rectangular shaped tubes. The closing seams 72A on the lateral tube are also off center, following the same pattern as for the intermediary seams.

**Figure 10B** shows the intermediary seams 71B between two adjacent rounded rectangular shaped seams 70B are centered in the middle of the adjacent faces of two adjacent rectangular shaped tubes. The closing seams 72B are also centered at the lateral rectangular shaped tubes at the edge opposite to the edge with an intermediary seam 71B.

**Figure 10C** shows the intermediary seams 71C between two adjacent rounded rectangular shaped tubes 70C are off center relative to the center of the adjacent faces of two rectangular shaped tubes. These intermediary seams alternate between connected above and below the center of the adjacent faces of the rectangular shaped tubes. The closing seams 72C on the lateral tube are located in the center of an adjoining side to the side with an intermediary seam 71C.

The present invention will now be further exemplified with reference to the following examples. The present invention is in no way limited to the given examples or to the embodiments presented in the figures.

### Examples 1-2

Example 1 comprises a nonwoven PET fabric with a tensile strength at break in the weft direction of 254 N.

Example 2 comprises the fabric according to example 1. The lateral edges were overlapped and seamed as shown in figure 3A. The seam was created by ultrasonic welding to obtain a thickness equal or less than a single layer of fabric, with a weld width of 3 mm.

The tensile strength at break of the fabric with seam was tested in the direction perpendicular to the seam. The tensile strength at break was 248N.

### Example 3

The fabric according to example 1 was utilized to form a multitubular gauntlet as shown and described for figures 1-8. The seams were formed using an ultrasonic welding with process parameters as described in example 2.

The burst pressure and elasticity of a series of multitubular gauntlets were tested. The average burst pressure prior to oxidation was 14.8 bar, with an average elasticity of 8.49%.

The multitubular gauntlets were oxidized and retested. The average burst pressure after oxidation was 13.8 bar, with an average elasticity of 10.62%.

The present invention is in no way limited to the embodiments described in the examples and/or shown in the figures. On the contrary, methods according to the present invention may be realized in many different ways without departing from the scope of the invention.

### Examples 4-20

The electrical resistance of non-woven and woven fabrics was tested. In order to simulate lead-acid battery condition samples were placed in a beaker filled with sulfuric acid. The sample was covered entirely with sulfuric acid. The beaker with sample and sulfuric acid was then placed into a desiccator during 24 hours under a vacuum. The acid-soaked sample was then placed into a PALICO measuring cell, measuring the electrical resistivity.

Comparative examples 4 to 7 comprised a single layer of polyester non-woven.

For each single layer of polyester non-woven of comparative examples 4 to 7, the experiment was repeated with two overlapping layers of said non-woven, labelled comparative examples 8 to 11 respectively. We note that when using two overlapping layers of non-woven fabric, the thickness increases approximately linearly and but the electrical resistivity does not. In fact it increases more than linearly.

**Table 1 : thickness [mm] and electrical resistivity [mOhm^{∗}cm²] of examples 4-20.**

| | **THICKNESS [MM]** | **ELECTRICAL RESISTIVITY [MΩ^{∗}CM²]** |
|---|---|---|
| C. EX. 4 | 0.70 | 91 |
| C. EX. 5 | 0.67 | 87 |
| C. EX. 6 | 0.70 | 82 |
| C. EX. 7 | 0.72 | 99 |
| C. EX. 8 | 1.44 | 268 |
| C. EX. 9 | 1.48 | 304 |
| C. EX. 10 | 1.38 | 212 |
| C. EX. 11 | 1.47 | 266 |
| EX. 12 | 0.55 | 2638 |
| EX. 13 | 0.50 | 3226 |
| EX. 14 | 0.48 | 4698 |
| EX. 15 | 0.50 | 3056 |
| EX. 16 | 0.45 | 4276 |
| EX. 17 | 0.40 | >5000 (out of bound) |
| C. EX. 18 | 0.50 | 315 |
| C. EX. 19 | 0.51 | 322 |
| C. EX. 20 | 0.50 | 320 |

Examples 12 to 15 comprise said two overlapping, non-woven layers according to comparative examples 8-11, which were ultrasonically welded together. The overlapping non-woven layers were ultrasonically welded prior to the treatment with sulfuric acid. We note that a thickness lower than a single non-woven layer is obtained, with a significant increase in electrical resistivity.

Examples 12 was repeated with a higher energy ultrasonic weld. Example 16 resulted in a weld with a thickness of 0.45 mm. Example 17 resulted in a weld with a thickness of 0.40 mm. These thinner, more dense fabrics obtained by ultrasonic welding of two non-wovens were tested for electrical resistivity. A significant further increase in electrical resistivity was noted. This shows that ultrasonic welding is suitable to locally increase the electrical resistivity in multitubular battery gauntlets. For example 17, the electrical resistivity was out of bounds of the measuring apparatus, with a bound of 5000 mOhm^{∗}cm² or 5000 mΩ ^{∗}cm².

When two layers of non-woven are made integral to one another and reduced to a single, thinner fabric the areal density thereof significantly increases. To test the influence of the areal density on electrical resistivity, three woven fabrics with similar areal density and thickness as example 12 were also tested. Comparative examples 18, 19 and 20 are a dense, woven polyester fabric with thickness similar to example 12. The woven fabrics show significantly lower electrical resistivity than the ultrasonic welded fabrics according to the present invention.

## Claims

1. Continuous process for the production of a multitubular gauntlet, said process comprising the steps of:
- continuously providing at least one sheet of fabric with two lateral edges;
- overlapping two lateral edges;
- seaming said overlap by welding or gluing, preferably ultrasonic welding, forming a closing seam wherein both lateral edges are joined together creating a tubular fabric,
- seaming said tubular fabric along seams parallel to the closing seam, thereby forming flat tubes parallel to the closing seam; and
- thermoforming the plurality of flat tubes into the desired shape corresponding the electrode to be used, thereby obtaining the multitubular gauntlet.

2. Continuous process according to claim 1, wherein the closing seam has a width of at most 5.0 mm, preferably the closing seam has a width of at most 4.0 mm, more preferably the closing seam has a width of at most 3.5 mm.

3. Continuous process according to any of claims 1 or 2, wherein the fabric is a non-woven fabric.

4. Continuous process according to any of claims 1-3, wherein the fabric comprises fibers chosen from the group of: polyester, polyolefin, polyamide and glass fiber.

5. Continuous process according to any of claims 1-4, wherein the fabric comprises fibers chosen from the group of: polyethyleneterephtalate (PET), polybutyleneterephtalate (PBT), bicomponent PET-coPET and bicomponent PET-PBT fibers.

6. Continuous process according to any of claims 1-5, wherein the fabric comprises fibers chosen from the group of: polyethyleneterephtalate (PET), bicomponent PET-coPET and polybutyleneterephtalate (PBT).

7. Continuous process according to any of claims 1-6, wherein the process comprises two sheets of fabric, wherein each lateral edge of each sheet of fabric is overlapped and seamed to a lateral edge from another sheet of fabric, thereby forming at least two preferably parallel closing seams.

8. Continuous process according to any of claims 1-7, wherein the overlap has a width substantially wider than said closing seam, said overlap forming a reinforcing lateral edge.

9. Continuous process according to claim 8, wherein the overlap corresponding to the reinforcing lateral edge is fixated with at least one fixating seam, preferably the fixating seam is parallel to the closing seam, preferably the fixating seam is formed by welding, more preferably ultrasonic welding.

10. Multitubular gauntlet for lead-acid batteries comprising at least one sheet of fabric with two lateral edges, said fabric forming a plurality of parallel tubes, wherein at least one lateral tube forming the edge of said gauntlet comprises an overlap of said lateral edges, wherein said overlap is seamed by welding or gluing, more preferably ultrasonic welding.

11. Multitubular gauntlet for lead-acid batteries according to claim 10, wherein both lateral tubes forming the edges of said gauntlet comprise an overlap of said lateral edges, wherein said overlap is seamed by welding or gluing, preferably ultrasonic welding forming a closing seam.

12. Multitubular gauntlet for lead-acid batteries according to any of claims 10 or 11, wherein said overlap has a width substantially wider than said closing seam, said overlap forming a reinforcing lateral edge.

13. Multitubular gauntlet for lead-acid batteries according to any of claims 10-12, wherein said gauntlet has a burst strength before oxidation and a burst strength after oxidation of at least 6 bar, preferably at least 12 bar.

14. Multitubular gauntlet for lead-acid batteries according to any of claims 10-13, wherein the ratio of tensile strength of the closing seam measured perpendicular to said seam to tensile strength of said fabric is at least 75%, preferably at least 95%, more preferably at least 100%.

15. Multitubular gauntlet for lead-acid batteries according to any of claims 10-14, wherein said multitubular gauntlet is produced by a process according to any of claims 1-9.
